# EUROPÄISCHE PATENTSCHRIFT

(11) **EP 0 462 239 B1**
(45) Veröffentlichungstag und Bekanntmachung des Hinweises auf die Patenterteilung: **22.09.1993**
(21) Anmeldenummer: 91900708.8
(22) Anmeldetag: 09.01.1991
(51) Int. Cl.: B65G 47/61

(54) **VERFAHREN UND VORRICHTUNG ZUR ÜBERGABE VON BEKLEIDUNGSSTÜCKEN AN TRANSPORTBÜGEL**
PROCESS AND DEVICE FOR HANGING ITEMS OF CLOTHING ON TRANSPORT HANGERS
PROCEDE ET DISPOSITIF POUR LE TRANSFERT DE VETEMENTS A DES CINTRES TRANSPORTEURS

(30) Priorität: 10.01.1990 CH 71/90
(43) Veröffentlichungstag der Anmeldung: 27.12.1991
(73) Patentinhaber: JENSEN AG BURGDORF, CH-3400 Burgdorf (CH)
(72) Erfinder: KOBEL, Rudolf, CH-3325 Hettiswil (CH)
(74) Vertreter: Fischer, Franz Joseph
(86) Internationale Anmeldenummer: CH9100006
(87) Internationale Veröffentlichungsnummer: WO9110610

(56) Entgegenhaltungen:
- EP-A- 0 335 062
- DE-A- 3 535 297
- DE-C- 3 725 523
- US-A- 3 961 699

## Beschreibung

### Technisches Gebiet

Die vorliegende Erfindung bezieht sich auf ein Verfahren zur Uebergabe von Bekleidungsstücken an Transportbügel gemäss dem Patentanspruch 1, auf eine Vorrichtung zum Durchführen des Verfahrens gemäss dem Patentanspruch 4 und auf die Verwendung der Vorrichtung in einer Anlage gemäss dem Oberbegriff des Patentanspruches 12.

### Stand der Technik

Die Automation, insbesondere in Wäschereibetrieben, ist heutzutage bereits weit fortgeschritten. In Waschautomaten gewaschene Bekleidungsstücke werden zur Weiterbehandlung in Trocknungseinrichtungen getrocknet, die heute soweit entwickelt sind, dass vorgängig zum Trocknungsvorgang mittels Heissluft die Kleidungsstücke zum Faltenfreimachen einer Dampfbehandlung unterworfen werden. Die getrockneten Bekleidungsstücke werden dann einem Faltautomaten zugeführt, der das früher manuell durchgeführte aufwendige Falten der Bekleidungsstücke automatisch ausführt. Ein weiterer Automatisierungsschritt ist dadurch zustandegekommen, dass man die Trocknungseinrichtung und den Faltautomaten mit Förderanlagen verbunden hat. Die gewaschenen Bekleidungsstücke werden eines nach dem anderen auf je einen speziell entwickelten Transportbügel gelegt oder aufgebügelt, wie der fachtechnische Ausdruck besagt, und gelangen längs der Förderanlage durch die Trocknungseinrichtung und an den Faltautomaten. Die speziell entwickelten Transportbügel weisen ein- und aufklappbare Bügelarme auf, wodurch am Faltautomaten ein automatisches Entfernen der Kleidungsstücke vom Bügel, das sogenannte Abbügeln, durch Einklappen der Bügelarme erfolgen kann. Ein Verfahren und eine Vorrichtung zur automatischen Uebergabe von Kleidungsstücken an einen Faltautomaten unter Verwendung von Transportbügeln mit ein- und aufklappbaren Bügelarmen ist beispielsweise in der DE 3 725 523 gezeigt. Dort werden die entlang einer Förderstrecke zugeführten Bekleidungsstücke auf einer geneigten Arbeitsfläche des Faltautomaten aufgelegt und festgehalten. Zum Herausziehen der Transportbügel werden diese über eine entsprechend geneigte Steigstrecke einer Uebergabevorrichtung in Richtung der Arbeitsflächenneigung bewegt. Dadurch werden die Bügelarme der Transportbügel, die Spreizfedern mit einer Totpunktlage haben, eingeklappt. Die Transportbügel können so aus dem Kleidungsstück herausgezogen werden.

Die Bügelarme der Transportbügel werden nach dem Abbügeln der Bekleidungsstücke wieder aufgeklappt und der Transportbügel einer Bedienperson zum Anlegen eines neuen Bekleidungsstückes zugeführt. Im Dokument DE 3 535 297 ist eine Fördereinrichtung für Kleiderbügel, auf welche Kleider angebracht oder abgenommen werden sollen, gezeigt. Die Kleiderbügel, die feste Bügelarme aufweisen, werden einzeln an einen Uebernahme- oder Uebergabeort gefördert und dort während dem Auf- oder Abbügeln von Kleidungsstücken festgehalten. Nach dem Auf- oder Abbügeln eines Kleidungsstückes an den festgehaltenen Kleiderbügel erfolgt ein Weitertransport des Kleiderbügels an eine weitere Fördereinrichtung.

Insbesondere bei bereits zugeknüpften Bekleidungsstücken, wie Hemden oder Jacken oder Bekleidungsstücken mit geschlossenem Reissverschluss, wie beispielsweise Overalls, ist das Aufbügeln an die Transportbügel mit festen oder aufgeklappten Bügelarmen umständlich und zeitaufwendig, muss doch dazu entweder das zugeknöpfte oder mit einem Reissverschluss geschlossene Kleidungsstück geöffnet, über den Bügel gelegt und wieder geschlossen oder durch umständliche Schwenkbewegungen über die einzelnen Bügelarme geführt werden. In Hochleistungsanlagen wirkt sich dies auf den gesamten Arbeitsablauf besonders nachteilig aus.

### Offenbarung der Erfindung

Es ist deshalb die Aufgabe der vorliegenden Erfindung, diesen Nachteil zu beseitigen und ein Verfahren und eine Vorrichtung zu offenbaren, mit denen der soeben geschilderte Arbeitsvorgang wesentlich vereinfacht und verkürzt werden kann.

Die Erfindung löst diese Aufgabe mit den im kennzeichnenden Teil des Patentanspruches 1 aufgeführten Verfahrensschritten. Eine Vorrichtung zum Durchführen des Verfahrens ist durch die im Patentanspruch 4 aufgeführten Merkmale gekennzeichnet. Im Patentanspruch 12 ist eine bevorzugte Verwendung der Vorrichtung offenbart.

### Kurzbeschreibung der Figuren

Anhand von Figuren wird im folgenden die Erfindung an einem Ausführungsbeispiel näher beschrieben. Es zeigen
- Fig. 1: eine vordere Teilansicht der erfindungsgemässen Vorrichtung mit einer Bedienperson zum Aufbügeln von Bekleidungsstücken,
- Fig. 2: eine Teilansicht der Vorrichtung gemäss der Fig. 1 von hinten, wobei die Blickrichtung in der Fig. 1 durch II angegeben ist,
- Fig. 3: eine vergrösserte Darstellung eines Teilbereiches der Fig. 2, jedoch mit Ansichtsrichtung III in der Fig. 1, und
- Fig. 4: einen bevorzugten Einsatz der erfindungsgemässen Vorrichtung in einer Anlage insbesondere zum Weiterbehandeln von gewaschenen Bekleidungsstücken.

### Bester Weg zur Ausführung der Erfindung

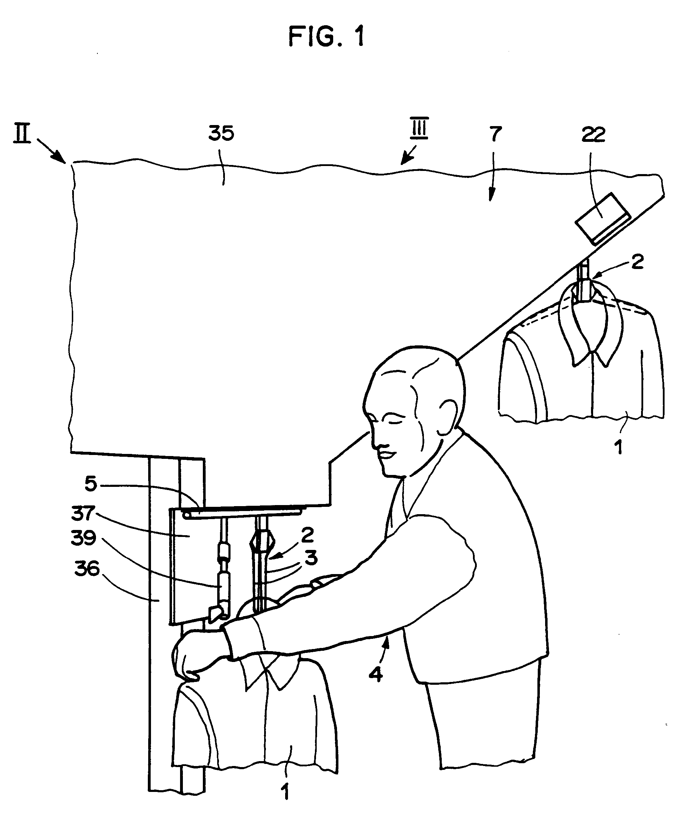

In der Fig. 1 ist eine teilweise Vorderansicht der erfindungsgemässen Vorrichtung dargestellt. Die Figur zeigt, wie eine Bedienungsperson an einem Uebergabeort 4 der Vorrichtung ein Bekleidungsstück 1 über einen Transportbügel 2 führt. Der Transportbügel 2 weist ein- und aufklappbare Bügelarme 3 auf, die sich zum mühelosen Einführen des Bekleidungsstückes 1 im eingeklappten Zustand befinden. Nachdem das Kleidungsstück über die Bügelarme 3 geschoben worden ist berührt die Hand der Bedienungsperson ein Fühlerelement 5, das über dem Bügel 2 an der Vorrichtung angeordnet ist. Diese Berührung bewirkt, dass ein Betätigungsorgan, das in dieser Figur nicht sichtbar ist, aktiviert wird und auf ein ebenfalls weiter hinten gezeigtes Oeffnungsorgan des Bügels.2 einwirkt, wodurch dessen Bügelarme 3 aufgeklappt werden. Das Bekleidungsstück hängt nun am Transportbügel und ist aufgebügelt, wie man in der Fachsprache sagt. Eine Fördereinrichtung 7 wird in Betrieb gesetzt und transportiert das aufgebügelte Kleidungsstück weiter bis zu einem Uebergabemittel 22, wo der Transportbügel mit dem Bekleidungsstück an einen extern angeordneten, nicht gezeichneten Förderer abgegeben wird. Gleichzeitig mit dem Weitertransport ist die Fördereinrichtung 7 dafür besorgt, dass der Uebergabestelle 4 ein weiterer Transportbügel 2 mit eingeklappten Bügelarmen 3 zugeführt und dort zum Aufbügeln eines weiteren Bekleidungsstückes 1 festgehalten wird. Das Fühlerelement 5 umfasst im gezeichneten Beispiel einen gasdichten elastischen Schlauch, der auf einen Drucksensor wirkt. Letzterer erfasst einen Druckanstieg bei Berührung und Zusammenquetschung des elastischen Schlauches und löst dadurch die Aktivierung des Betätigungsorganes aus. Selbstverständlich könnten ebenfalls andere Fühlerelemente, wie beispielsweise elektrooptische (Lichtschranke) oder elektromechanische (Microswitch) dazu eingesetzt werden.

Gegenüber dem heute bekannten Stand der Technik, wo die Aufbügelung von Bekleidungsstücken auf Transportbügel mit aufgeklappten oder ausgebreiteten Bügelarmen erfolgt, ist bei der erfindungsgemässen Vorrichtung dieser Vorgang dadurch, dass zum Aufbügeln die Bügelarme eingeklappt sind, wesentlich einfacher und in wesentlich kürzerer Zeit durchführbar. Vor allem dann, wenn die Bekleidungsstücke im zugeknöpften Zustand oder mit geschlossenem Reissverschluss angeliefert werden, kann ein zeitraubendes Oeffnen und Wiederverschliessen der Bekleidungsstücke oder ein umständliches Einfahren der Bügelarme in das Kleidungsstück vermieden werden.

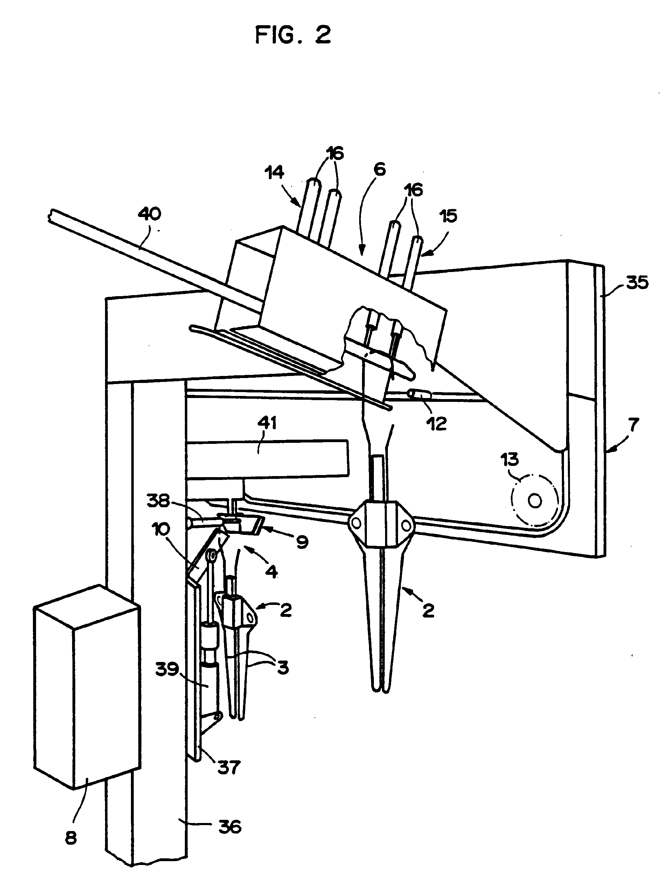

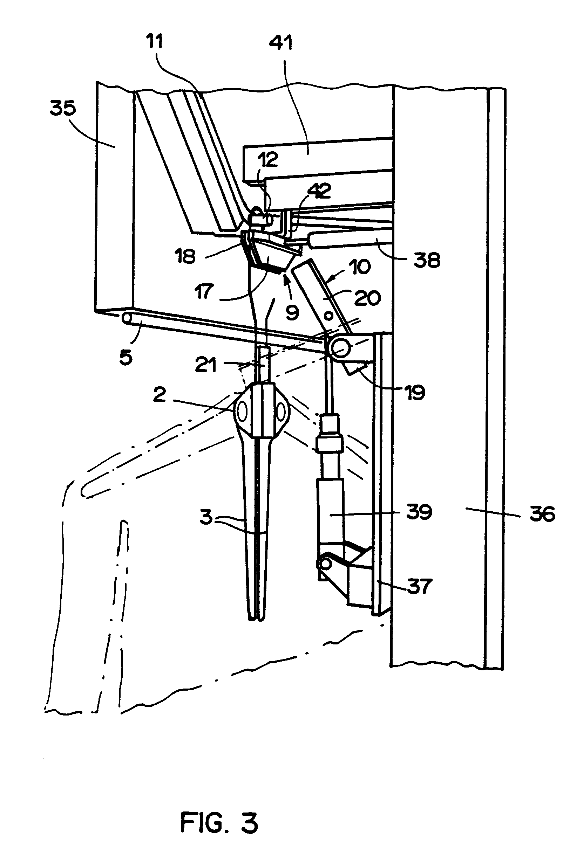

In der Fig. 2 ist eine hintere Teilansicht aus der Richtung II der in der Fig. 1 gezeigten Vorrichtung dargestellt. Die Vorrichtung ist im wesentlichen an einen Ständer 36, dessen oberes Ende sichtbar ist, angebaut. Im wesentlichen an einem mit dem Ständer verbundenen Ausleger 41 ist die Fördereinrichtung 7 angeordnet. Zuführmittel 6 zum Zuführen von Transportbügeln 2 mit eingeklappten Bügelarmen 3 sind ebenfalls mit dem Ständer verbunden. Die Transportbügel 2 gleiten über eine von oben nach unten geneigte Zuführschiene 40 zu den Zuführmitteln 6. Letztere sind eine Vereinzelungseinrichtung 6, die einen Bremsteil 14 und einen Zuführteil 15 umfasst. Jeder der Teile 14, 15 ist mit Steuerelementen 16 ausgestattet, welche beispielsweise pneumatisch oder elektromechanisch wirken. Der Bremsteil 14 hat zur Aufgabe, über die Führungsschiene 40 herabgleitende Bügel zu stoppen, um zu verhindern, dass sie bereits an in der Vereinzelungseinrichtung befindliche Bügel anschlagen. Durch sequentielle Ansteuerung der Steuerelemente 16 werden die Transportbügel in an und für sich bekannter Weise vereinzelt und dem Zuführteil zugeführt. Die Fördereinrichtung 7 umfasst einen geschlossenen und schrittweise umlaufenden Kettentrieb 11, der auf seiner einer vorderen Abdeckung 35 abgewandten Seite mit mehreren seitwärts herausragenden zapfenförmigen Mitnehmern 12 versehen ist. Umlenkrollen 13, von denen mindestens zwei vorhanden sind, sind für die Führung des Kettentriebes besorgt. Eine der Umlenkrollen ist beispielsweise durch einen Elektromotor oder Schrittmotor angetrieben und so gesteuert, dass der Kettentrieb 11 anhält, wenn sich einer der Mitnehmer 12 an der sich fluchtend zur Zuführschiene 40 befindlichen Position befindet. Das unterste Steuerelement 16 des Zuführteiles 15 kann nun erregt werden, was bewirkt, dass der vorher vereinzelte unterste Transportbügel 2 auf den bereitgestellten Mitnehmer 12 gleitet. Die Mitnehmer 12 sind so zueinander beabstandet, dass sich zu diesem Zeitpunkt ein weiterer Transportbügel 2 mit eingeklappten Bügelarmen 3 am Uebergabeort 4, bereit zum Aufbügeln mit einem Kleidungsstück, befindet. Festhaltemittel 9, beispielsweise durch einen ersten Pneumatikzylinder angetrieben, halten den Transportbügel 2 am Uebergabeort, beispielsweise durch Einklemmen eines Teiles des Bügelhakens fest. Das Aufbügeln des Transportbügels 2 mit einem Bekleidungsstück 1 erfolgt in der bereits beschriebenen Art. Sobald das vorgängig beschriebene Fühlerelement die Zuführbewegung des Bekleidungsstückes durch die Bedienungsperson erfasst, wird ein Betätigungsorgan 10, das weiter hinten anhand der Fig. 3 näher beschrieben ist, beispielsweise mit einem zweiten Pneumatikzylinder 39 aktiviert. Das Betätigungsorgan 10 wirkt dabei auf ein am Transportbügel 2 angeordnetes Oeffnungsorgan und bewirkt dadurch das Aufklappen oder Ausbreiten der Bügelarme. Nach diesem Vorgang wird der Kettentrieb erneut in Umlauf versetzt, solange, bis der sich bei der Vereinzelungseinrichtung 6 befindliche Mitnehmer 12 am Uebergabeort 4 angelangt ist. Das vorgängig aufgebügelte Bekleidungsstück ist während dieser Zeit durch den Kettentrieb 11 zu den Uebergabemitteln 22 weiter transportiert und dort an den bereits genannten externen Förderer abgegeben worden. Die ganze Vorrichtung wird durch Steuermittel gesteuert, welche vorzugsweise in einer Steuereinheit 8 zusammengefasst sind. Zum Steuern der Fördereinrichtung 7, der Vereinzelungseinrichtung 6, der Festhalteelemente 9 und des Betätigungsorganes 10 sind in der Steuereinheit vorzugsweise pneumatische, elektromechanische und/oder elektronische Bauteile angeordnet. Das Fühlerelement 5 sowie eventuell weitere, aus der Zeichnung nicht ersichtliche Fühlerelemente, die zum Feststellen der Vorwärtsbewegung des Kettentriebes dienen, falls dieser nicht mit einem Schrittmotor angetrieben wird, sind vorzugsweise ebenfalls mit der Steuereinheit 8 verbunden.

In der Fig. 3 ist der Teilbereich des Uebergabeortes 4 vergrössert dargestellt. Zu beachten ist, dass die Blickrichtung in der Fig. 3 unterschiedlich zu derjenigen in der Fig. 2 ist. Die Blickrichtungen der beiden Figuren 2 und 3 sind in der Fig. 1 mit II und III im wesentlichen bezeichnet. In der Fig. 3 sind vor allem die Festhalteelemente 9 und das Betätigungsorgan 10 sichtbar. Der auf dem Mitnehmer 12 hängende Transportbügel 2 mit den eingeklappten Bügelarmen 3 wird zwischen eine bewegliche Klemmbacke 17 und eine fest angeordnete Klemmbacke 18 der Festhalteelemente 9 geführt. In nicht näher dargestellter Art, sind die Festhalteelemente 9, beispielsweise mit einem Winkel 42, mit dem Ausleger 41 verbunden. Die in Längsrichtung des Auslegers 41 bewegliche Klemmbacke 17 ist mit dem ersten Pneumatikzylinder 38 wirkverbunden und wird durch diesen im Arbeitszustand nach vorne gegen die Gegenbacke 18 bewegt. In der Zeichnung nicht sichtbare elastische Beläge der Klemmbacke 17 und der Gegenbacke 18 halten dadurch einen Teilbereich des Hakens des Transportbügels 2 fest. Durch diese Massnahme wird das Einführen der Bügelarme in das aufzubügelnde Bekleidungsstück 1 erleichtert. Wie bereits beschrieben wird durch das Fühlerelement 5 das Betätigungsorgan 10 aktiviert, nachdem ein Bekleidungsstück 1 vollständig über den Transportbügel 2 geführt worden ist. Im gezeigten Ausführungsbeispiel ist das Betätigungsorgan ein Hebel 10, welcher an seinem einen Ende 19 mit einer Montageplatte 37 die am Ständer 36 befestigt ist, schwenkbar verbunden ist. Der zweite Pneumatikzylinder 39, dessen eines Ende an der Montageplatte 37 schwenkbar gelagert ist, ist mit seinem anderen Ende ungefähr mittig mit dem Hebel 10 verbunden. Durch das Betätigen des zweiten Pneumatikzylinders 39 wird das andere Ende 20 des Hebels 10 nach unten gegen ein Oeffnungsorgan 21 des Transportbügels 2 bewegt. Durch das Niederdrücken des Oeffnungsorganes 21 werden die Bügelarme 3 des Transportbügels aufgeklappt bzw. ausgebreitet, wodurch das entsprechende Bekleidungsstück aufgebügelt ist. Das Betätigungsorgan 10 wird darauf durch den zweiten Pneumatikzylinder 39 in seine Ruhelage zurückgeführt, der erste Pneumatikzylinder 38 löst die bewegliche Klemmbacke 17 der Festhaltemittel 9 und der Kettentrieb 11 der Fördereinrichtung 7 wird wieder in Bewegung gesetzt, bis sich der nächste Transportbügel am Uebergabeort befindet.

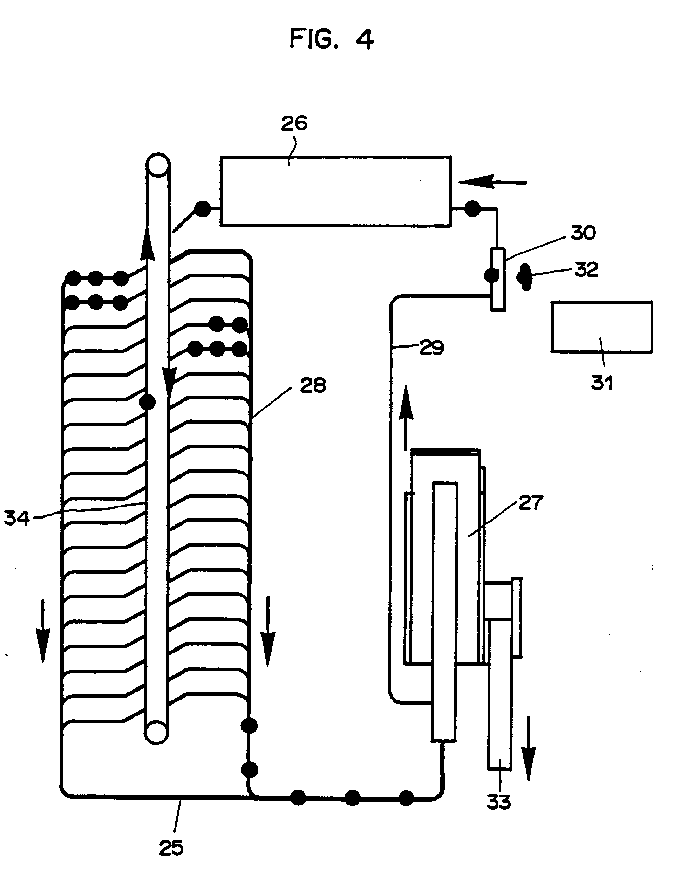

In der Abbildung 4 ist eine bevorzugte Verwendung der erfindungsgemässen Vorrichtung in einer Anlage 25, insbesondere zum Weiterbehandeln von gewaschenen Bekleidungsstücken dargestellt. Die an und für sich bekannte Anlagenanordnung umfasst im wesentlichen eine Dampfbehandlungs- und Trocknungseinrichtung 26 zum Faltenfreimachen und Trocknen von aufgebügelten Bekleidungsstücken, ein Transportbügelsystem 28 mit einer Sortiereinrichtung 34 sowie einen Faltautomaten 27. Die in der Dampfbehandlungs- und Trocknungseinrichtung getrockneten Kleidungsstücke gelangen über das Transportbügelsystem 28 in die Sortiereinrichtung 34 und werden dort losweise anhand von beispielsweise an den Bekleidungsstücken angebrachten Kennzeichnungen sortiert. Ein Kleidungsstück nach dem anderen von einem bestimmten Los wird nun über das Transportbügelsystem 28 dem Faltautomaten 27 zugeführt, dort abgebügelt und gefaltet. Die gefalteten Bekleidungsstücke 33 verlassen eines nach dem anderen den Faltautomaten. Die Transportbügel werden mit eingeklappten Bügelarmen über einen Rückführungsweg 29 der erfindungsgemässen Vorrichtung 30 zugeführt. Diese ist an einer geeigneten Stelle längs des Rückführungsweges angeordnet. Letzterer mündet an die Zuführschiene 41 der erfindungsgemässen Vorrichtung. Gewaschene Bekleidungsstücke werden ab einem Wäschestapel 31 durch eine Bedienungsperson 32 in der vorgängig geschilderten Art mittels der erfindungsgemässen Vorrichtung 30 aufgebügelt und dem System zugeführt.

### Gewerbliche Verwertbarkeit

Im Zuge des technischen Fortschrittes mit immer leistungsfähigeren Systemkomponenten, wie Trocknungseinrichtungen 26 und Faltautomaten 27 ist es wesentlich, dass durch die erfindungsgemässe Vorrichtung und das aufgezeigte Verfahren auch das Aufbügeln von Bekleidungsstücken verkürzt und vereinfacht werden konnte.

## Patentansprüche

1. Verfahren zur Uebergabe von Bekleidungsstücken (1) an Transportbügel (2), welche an einen Uebergabeort (4) gefördert werden, an dem eines der Bekleidungsstücke (1) an einen der Transportbügel (2) aufgehängt wird, wonach der Transportbügel (2) mit dem daran aufgehängten Bekleidungsstück (1) weiter transportiert wird, dadurch gekennzeichnet, dass Transportbügel (2) mit ein- und aufklappbaren Bügelarmen (3) verwendet werden, dass am Uebergabeort beim Aufbügeln von einem der Bekleidungsstücke (1) an einen der Transportbügel (2) das Bekleidungsstück über die eingeklappten Bügelarme (3) des Transportbügels (2) geführt wird und dass darauf die Bügelarme (3) aufgeklappt werden.

2. Verfahren nach Anspruch 1, dadurch gekennzeichnet, dass die Transportbügel (2) dem Uebergabeort (4) stückweise zugeführt werden.

3. Verfahren nach Anspruch 1 oder 2, dadurch gekennzeichnet, dass das Aufklappen der Bügelarme (3) durch ein Fühlerelement (5), vorzugsweise durch einen pneumatisch, elektrooptisch oder elektromechanisch wirkenden Sensor ausgelöst wird.

4. Vorrichtung zum Durchführen des Verfahrens nach Anspruch 1, mit Mitteln (6) zum stückweisen Zuführen der Transportbügel (2) an eine Fördereinrichtung (7), wobei die Fördereinrichtung (7) zum stückweisen Vorwärtsbewegen der Transportbügel an einen Uebergabeort (4) und zum Weitertransport des mit einem Bekleidungsstück (1) beaufschlagten Transportbügels (2) ausgelegt ist und am Uebergabeort Elemente (9) zum Festhalten eines der Transportbügel (2) angeordnet sind und wobei Mittel (8) zum Steuern der Vorrichtung vorhanden sind, dadurch gekennzeichnet, dass die Transportbügel (2) mit ein- und ausklappbaren Bügelarmen (3) ausgerüstet und dem Uebergabeort (4) mit eingeklappten Bügelarmen (3) zuführbar sind, und dass ein auf den Transportbügel einwirkendes Betätigungsorgan (10) zum Aufklappen der Bügelarme nach dem Ueberstreifen eines Bekleidungsstückes vorhanden ist.

5. Vorrichtung nach Anspruch 4, dadurch gekennzeichnet, dass im Bereich des Uebergabeortes (4) mindestens ein Fühlerelement (5) zum Detektieren eines über einen der Transportbügel (2) übergestreiften Bekleidungsstückes (1) vorhanden ist, und dass das Fühlerelement (5) zum Aktivieren des Betätigungsorganges (10) bestimmt ist.

6. Vorrichtung nach Anspruch 4 oder 5, dadurch gekennzeichnet, dass die Fördereinrichtung (7) als schrittweise umlaufender Kettentrieb (11) mit mehreren Mitnehmern (12) für die Transportbügel (2) und mit mindestens zwei Umlenkrollen (13), wovon eine als Antriebsrolle, ausgebildet ist.

7. Vorrichtung nach einem der Ansprüche 4 bis 6, dadurch gekennzeichnet, dass die Zuführmittel eine Vereinzelungseinrichtung (6) mit einem Bremsteil (14) und einem Zuführteil (15) umfassen, in welchen Teilen (14, 15) pneumatisch und/oder elektromechanisch wirkende Steuerelemente (16) enthalten sind.

8. Vorrichtung nach einem der Ansprüche 4 bis 7, dadurch gekennzeichnet, dass die Elemente zum Festhalten (5) mindestens eine bewegliche, vorzugsweise pneumatisch oder elektromechanisch ansteuerbare Klemmbacke (17) enthalten, und dass die Klemmbacke zum Andrücken eines Teiles des Transportbügels (2) gegen eine Gegenbacke (18) bestimmt ist.

9. Vorrichtung nach einem der Ansprüche 4 bis 8, dadurch gekennzeichnet, dass das Betätigungsorgan einen Hebel (10) umfasst, der an einem seiner Enden (19) schwenkbar gelagert ist und mit seinem anderen Ende (20) an ein am Transportbügel (2) angeordnetes Oeffnungsorgan (21) in Eingriff bringbar ist.

10. Vorrichtung nach einem der Ansprüche 4 bis 9, dadurch gekennzeichnet, dass die Steuermittel eine pneumatische, elektromechanische und/oder elektronische Bauteile aufweisende Steuereinheit (8) ist, welche zum Steuern der Fördereinrichtung, der Vereinzelungseinrichtung, der Festhalteelemente und des Betätigungsorganes vorgesehen ist.

11. Vorrichtung nach einem der Ansprüche 4 bis 10, dadurch gekennzeichnet, dass Mittel (22) zum Uebergeben vom mit einem Bekleidungsstück beaufschlagten Transportbügel von der Fördereinrichtung an einen extern angeordneten Förderer vorhanden sind.

12. Verwendung der Vorrichtung nach Anspruch 4 in einer Anlage (25) insbesondere zum Weiterbehandeln von gewaschenen Bekleidungsstücken, mit wenigstens einer Dampfbehandlungs- und Trocknungseinrichtung (26) sowie einer Falteinrichtung (27), wobei ein in sich geschlossenes Transportbügelsystem (28) Bekleidungsstücke der Dampfbehandlungs- und Trocknungseinrichtung und darauf der Falteinrichtung zuführt und wobei die abgebügelten Transportbügel längs eines Rückführungspfades (29) wieder an den Eingang der Dampfbehandlungs- und Trocknungseinrichtung (26) gelangen, wobei die Vorrichtung (30) im Bereiche des Rückführungspfades (29) angeordnet ist.

## Claims

1. Process for hanging items of clothing (1) on transport hangers (2), which are conveyed to a transfer point (4) at which one of the items of clothing (1) is hung on one of the transport hangers (2), after which the transport hanger (2) with the item of clothing (1) is transported further, wherein transport hangers (2) are used with spreadable and retractible hanger arms (3), wherein at the transfer point, during placing of one of the items of clothing (1) on one of the transport hangers (2), the item of clothing is led over the retracted arms (3) of the transport hanger (2) and wherein the hanger arms (3) are spread out thereupon.

2. Process according to claim 1, wherein the transport hangers (2) are conveyed piece-by-piece to the transfer point (4).

3. Process according to claim 1 or 2, wherein the spreading out of the hanger arms (3) is triggered by a detecting element (5), preferably by a sensor operating pneumatically, electro-optically or electro-mechanically.

4. Device for carrying out the process according to claim 1, with means (6) for conveying the transport hangers (2) piece-by-piece on a conveyor (7), the conveyor (7) being designed to advance the transport hangers piece-by-piece to a transfer point (4) and to further transport the transport hanger (2) loaded with an item of clothing (1), and elements (9) being disposed at the transfer point to hold one of the transport hangers (2), and means (8) being provided to control the device, wherein the transport hangers (2) are equipped with spreadable and retractible hanger arms (3) and are conveyable to the transfer point (4) with retracted hanger arms (3) and wherein an actuating mechanism (10) acting upon the transport hanger is provided to spread out the hanger arms after an item of clothing has been slipped over.

5. Device according to claim 4, wherein at least one detecting element (5) is provided in the area of the transfer point (4) to detect an item of clothing (1) slipped over the transport hanger (2), and wherein the detecting element (5) serves to activate the actuating mechanism (10).

6. Device according to claim 4 or 5, wherein the conveyor (7) is designed as a gradually rotating chain drive (11) with several carriers (12) for the transport hangers (2) and with at least two guide rollers (13), one of which is designed as a driving roller.

7. Device according to one of the claims 4 to 6, wherein the conveyor means comprise a separating device (6) with a brake part (14) and a conveying part (15), in which parts (14, 15) control elements (16) are contained operating pneumatically and/or electromechanically.

8. Device according to one of the claims 4 to 7, wherein the holding elements (5) contain at least one moveable gripping jaw (17) which can be triggered preferably pneumatically or electromechanically, and wherein the gripping jaw serves to press part of the transport hanger (2) against a counter-jaw (18).

9. Device according to one of the claims 4 to 8, wherein the actuating mechanism comprises a lever (10), which is pivotably disposed on one of its ends (19) and can be engaged with its other end (20) to an opening element (21) disposed on the transport hanger (2).

10. Device according to one of the claims 4 to 9, wherein the control means is a control module (8) having pneumatical, electromechanical and/or electronic components, which module serves to control the conveyor, the separating device, the holding elements and the actuating mechanism.

11. Device according to one of the claims 4 to 10, wherein means (22) are provided to transfer the transport hanger loaded with an item of clothing from the conveyor to an externally disposed conveyor.

12. Use of the device according to claim 4 in a facility (25) particularly for further processing of laundered items of clothing, with at least a steam treatment and drying installation (26) as well as a folding installation (27), a closed transport hanger system (28) bringing items of clothing to the steam treatment and drying installation and thereafter to the folding installation, and the unloaded transport hangers again reaching the entrance to the steam treatment and drying installation (26) along a return path (29), the device (30) being disposed in the area of the return path (29).

## Revendications

1. Procédé de transfert de pièces de vêtements (1) sur des cintres de transport (2), qui sont déplacés à un point de transfert (4) sur lequel une des pièces de vêtements (1) est accrochée à un cintre de transport (2), après quoi le cintre de transport (2) continue à être transporté avec la pièce de vêtement (1) qui y est suspendue, caractérisé en ce que les cintres de transport (2) sont utilisés avec des bras de cintres (3) déployables et repliables, que la pièce de vêtement est guidée sur le lieu de transfert pour le repassage d'une des pièces de vêtements (1) sur un des cintres de transport (2) par l'intermédiaire des bras (3) repliés du cintre de transport (2) et qu'ensuite les bras du cintre (3) sont déployés.

2. Procédé selon la revendication 1, caractérisé en ce que les cintres de transport (2) sont amenés séparément au point de transfert (4).

3. Procédé selon la revendication 1, caractérisé en ce que le repliage des bras du cintre (3) est déclenché par un capteur (5), de préférence par un capteur à action pneumatique, électro-optique ou électromécanique.

4. Dispositif pour la réalisation du procédé selon la revendication 1, avec des moyens (6) pour l'amenage séparé des cintres de transport (2) à un dispositif de transport (7), le dispositif de transport (7) étant conçu pour l'avancement séparé des cintres de transport à un point de transfert (4) et pour la poursuite du transport du cintre de transport (2) chargé d' une pièce de vêtement (1) et des éléments (9) de maintien de l'un des cintres de transport (2) étant disposés sur le lieu de transfert, des moyens (8) de commande du dispositif étant prévus, caractérisé en ce que les cintres de transport (1) sont équipés de bras de cintres (3) repliables et déployables et amenés sur le lieu de transfert (4) avec les bras (3) repliés et qu'un organe d'actionnement (10) agissant sur le cintre de transport est prévu pour déployer les bras du cintre après l'enfilage d'une pièce de vêtement.

5. Dispositif selon la revendication 4, caractérisé en ce qu'il existe dans le domaine du point de transfert (4) au minimum un capteur (5) pour la détection d'une pièce de vêtement (1) enfilée sur le cintre de transport (2) et que le capteur (5) est destiné à l'activation de l'organe d'actionnement (10).

6. Dispositif selon la revendication 4 ou 5, caractérisé en ce que le dispositif de transport (7) est constitué sous la forme d'un entraînement à chaîne (11) à fonctionnement continu par pas avec plusieurs entraîneurs (12) pour les cintres de transport (2) et au minimum deux rouleaux de renvoi (13), dont l'un est constitué sous la forme d'un rouleau d'entraînement.

7. Dispositif selon l'une des revendications 4 à 6, caractérisé en ce que les moyens d'amenage comprennent un dispositif de séparation (6) avec une partie frein (14) et une partie amenage (15) dans les parties desquelles (14, 15) sont prévus des éléments de commande (16) à action pneumatique et/ou électromécanique.

8. Dispositif selon l'une des revendications 4 à 7, caractérisé en ce que les éléments d'arrêt (5) contiennent au minimum un mors de serrage (17) mobile, de préférence commandable pneumatiquement ou électromécaniquement et que le mors de serrage est destiné à la pression d'une partie du cintre de transport (2) contre un mors opposé (18).

9. Dispositif selon une des revendications 4 à 8, caractérisé en ce que l'organe d'actionnement comprend un levier (10) qui est supporté de façon pivotable à l'une de ses extrémités (19) et peut être amené en prise par son autre extrémité (20) à un organe d'ouverture (21) disposé sur le cintre de transport (2).

10. Dispositif selon l'une des revendications 4 à 9, caractérisé en ce que le moyen de commande est une unité de commande (8) disposant de composants pneumatiques, électromécaniques et/ou électroniques, lequel est prévu pour la commande du dispositif de transport, du dispositif de séparation, des éléments d'arrêt et de l'organe d'actionnement.

11. Dispositif selon l'une des revendications 4 à 10, caractérisé en ce que les moyens (22) sont prévus pour le transfert du cintre de transport chargé d'une pièce de vêtement du dispositif de transport à un transporteur disposé de façon externe.

12. Utilisation du dispositif selon la revendication 4 dans une installation (25), en particulier pour le traitement ultérieur de pièces de vêtements lavées comportant au minimum un dispositif de traitement à la vapeur et de séchage (26), ainsi qu'un dispositif de pliage (27), un système de cintres de transport (28) en soi séparé amenant les pièces de vêtements du dispositif de traitement à la vapeur et de séchage et ensuite au dispositif de pliage, les cintres de transport repliés revenant le long d'une voie de retour (29) à l'entrée du dispositif de traitement à la vapeur et de séchage (26), le dispositif (30) étant disposé dans le domaine de la voie de retour (29).
